# EUROPÄISCHE PATENTSCHRIFT

(11) **EP 2 196 663 B1**
(45) Veröffentlichungstag und Bekanntmachung des Hinweises auf die Patenterteilung: **29.03.2017**
(21) Anmeldenummer: 09174237.9
(22) Anmeldetag: 27.10.2009
(51) Int. Cl.: F16L 33/30, F02M 37/10, F02M 37/00, F16L 11/115

(54) **Wellrohr einer Kraftstoffleitung**
Corrugated pipe of a fuel line
Tube ondulé d'une conduite de carburant

(30) Priorität: 11.12.2008 DE 102008061576
(43) Veröffentlichungstag der Anmeldung: 16.06.2010
(73) Patentinhaber: Continental Automotive GmbH, 30165 Hannover (DE)
(72) Erfinder: Hagist, Dieter, 56112, Lahnstein (DE); Nather, Helmut, 65520, Bad Camberg (DE)

(56) Entgegenhaltungen:
- DE-C- 271 807
- DE-U1- 20 008 775
- JP-A- 2002 039 450
- JP-A- 2003 113 986
- JP-A- 2003 120 866
- US-A- 4 861 238
- US-A1- 2001 014 261
- US-A1- 2007 113 912

## Beschreibung

Die Erfindung betrifft ein Wellrohr einer Kraftstoffleitung einer Kraftstoffversorgungsanlage eines Kraftfahrzeuges mit einem steifen Endstück und mit einem biegsamen, Wellen aufweisenden Wellenabschnitt und mit einem zumindest eine Erhebung aufweisenden, zum Ansetzen eines Montagewerkzeuges ausgebildeten Montageabschnitt.

Solche Wellrohre werden bei heutigen Kraftstoffversorgungsanlagen heutiger Kraftfahrzeuge häufig zum Anschluss einer Kraftstoffpumpe eingesetzt und sind aus der Praxis bekannt. Bei der bekannten Kraftstoffversorgungsanlage wird das Wellrohr mit dem Endabschnitt auf einen meist ein Tannenbaumprofil aufweisenden Anschlussstutzen der Kraftstoffpumpe aufgeschoben. Das Endstück ist hierfür zylindrisch gestaltet. Der Montageabschnitt ist zwischen dem Endstück und dem Wellenabschnitt angeordnet und weist die Wandstärke des Endstücks auf. Der Wellenabschnitt ermöglicht die Flexibilität des Wellrohrs im Kraftstoffbehälter und einen Ausgleich von Toleranzen der Kraftstoffversorgungsanlage. Der Montageabschnitt des bekannten Wellrohrs ist in axialer Richtung steif gestaltet und ermöglicht die Einleitung von Druckkräften in das Wellrohr. Diese Einleitung von Druckkräften ist notwendig, um das Endstück auf das Tannenbaumprofil der Kraftstoffpumpe aufzuschieben. Ein Montagewerkzeug zur Einleitung dieser Druckkräfte umgreift zangenartig den Montageabschnitt und stützt sich an den Erhebungen ab.

Die US 2007/113912 A1 offenbart ein Rohr zur Führung eines Gases oder eine Flüssigkeit insbesondere in Verbindung mit einem Verbrennungsmotor. Das Rohr weist hierzu einen Tragkörper und ein Haut auf. Der Tragkörper besteht aus einem stei fen Kunststoff und weist eine Mehrzahl von Ausnehmungen auf, welche den Tragkörper durchdringen. Durch die Ausnehmungen weist der Tragkörper eine Flexibilität in Längsrichtung auf und ist gleichzeitig Widerstandsfähig gegen Druckkräfte. Die Haut ist aus einem dünnen Kunststoff gebildet und umfasst den Tragkörper derart, dass die Ausnehmungen überdeckt sind.

Die JP 2003 120866 A offenbart einen Schlauch mit einer Schutzvorrichtung, die eine hohe Beständigkeit gegen eine Beschädigung durch beispielsweise Hitze und Flammen von der Seite der Außenumfangsfläche aufweist. Der Schlauch ist vorzugsweise zur Führung von Benzin, Leichtöl und chemischen Substanzen geeignet. Der Schlauch weist einen rohrförmigen Grundkörper auf, der mit einer rohrförmigen Schutzvorrichtung, die koaxial zum Grundkörper ausgerichtet ist, umgeben ist.

DE 200 08 775 U1 offenbart ein Wellrohr, wobei die zum Endstück benachbarte steife Erhebung wellenförmig gestaltet ist.

Nachteilig bei dem bekannten Wellrohr ist, dass der Montageabschnitt biegesteif ist. Damit beansprucht das Wellrohr mit dem auf dem Anschlussstutzen aufgeschobenen Endstück und dem Montageabschnitt einen sehr großen unflexiblen Bauraum. Dies führt jedoch dazu, dass das Wellrohr bei niedrigen Kraftstoffbehältern eine scharfe Biegung im Wellenabschnitt erfordert. Das Wellrohr ist daher sehr unflexibel.

Der Erfindung liegt das Problem zugrunde, ein Wellrohr der eingangs genannten Art so weiter zu bilden, dass es besonders flexibel ist.

Dieses Problem wird erfindungsgemäß durch ein Wellrohr gemäß unabhängigem Anspruch 1 gelöst.

Durch diese Gestaltung hat der Montageabschnitt mit der wellenförmigen Gestaltung der Erhebung eine Flexibilität, ähnlich der Wellen des Wellenabschnitts. Die Flexibilität des Montageabschnitts ermöglicht den Beginn der Biegung des erfindungsgemäßen Wellrohres bereits in dem Montageabschnitt. Hierdurch ist das Wellrohr besonders flexibel. Die zumindest eine Versteifung versteift jedoch den Montageabschnitt in axialer Richtung, so dass ein Montagewerkzeug an der Erhebung angesetzt werden kann, um das Endstück auf den Anschlussstutzen aufzuschieben. Ein besonders vorteilhafter Einsatz des erfindungsgemäßen Wellrohres besteht in niedrigen Kraftstoffbehältern, in denen die Flexibilität des Montageabschnitts eine einfache Verlegung des Wellrohres ermöglicht.

Die Versteifung gestaltet sich gemäß einer vorteilhaften Weiterbildung der Erfindung konstruktiv besonders einfach, wenn die Versteifung eine in der wellenförmigen Erhebung angeordnete, von einem Wellenberg bis zu einem Wellental geführte Vertiefung hat.

Der Montageabschnitt hat gemäß einer anderen vorteilhaften Weiterbildung der Erfindung in axialer Richtung eine besonders hohe Stabilität, wenn mehrere Vertiefungen symmetrisch um den Umfang der wellenförmigen Erhebung angeordnet sind. Der bauliche Aufwand zur unmittelbaren Einleitung von Kräften in axialer Richtung in das Endstück lässt sich gemäß einer anderen vorteilhaften Weiterbildung der Erfindung besonders gering halten, wenn das Wellental der wellenförmigen Erhebung auf der Höhe des Durchmessers des Endstücks angeordnet ist.

Die Fertigung des erfindungsgemäßen Wellrohres gestaltet sich besonders einfach, wenn die Vertiefungen als konkave Wölbungen ausgebildet sind.

Zur Erhöhung der Flexibilität des Montageabschnitts trägt es gemäß einer anderen vorteilhaften Weiterbildung der Erfindung bei, wenn die wellenförmige Erhebung die Höhe der Wellen des Wellenabschnitts hat.

Eine unterschiedliche Belastung der Wellen des Wellenabschnitts und der Erhebung des Montageabschnitts lässt sich gemäß einer anderen vorteilhaften Weiterbildung der Erfindung einfach vermeiden, wenn der Abstand der Erhebung von der nächsten Welle des Wellenabschnitts dem Abstand zweier Wellen des Wellenabschnitts entspricht.

Zur weiteren Vereinfachung der Fertigung des erfindungsgemäßen Wellrohres trägt es bei, wenn die Wandstärke der wellenförmigen Erhebung und der Wellen des Wellenabschnitts im Wesentlichen gleich sind.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig. 1: eine Kraftstoffversorgungsanlage mit einem erfindungsgemäßen Wellrohr,
- Fig. 2: vergrößert einen Endabschnitt des Wellrohres aus Figur 1,
- Fig. 3: vergrößert den Endabschnitt des Wellrohrs aus Figur 1 bei der Montage in einer Schnittdarstellung,
- Fig. 4: eine Schnittdarstellung durch das Wellrohr aus Figur 3 entlang der Linie IV - IV.

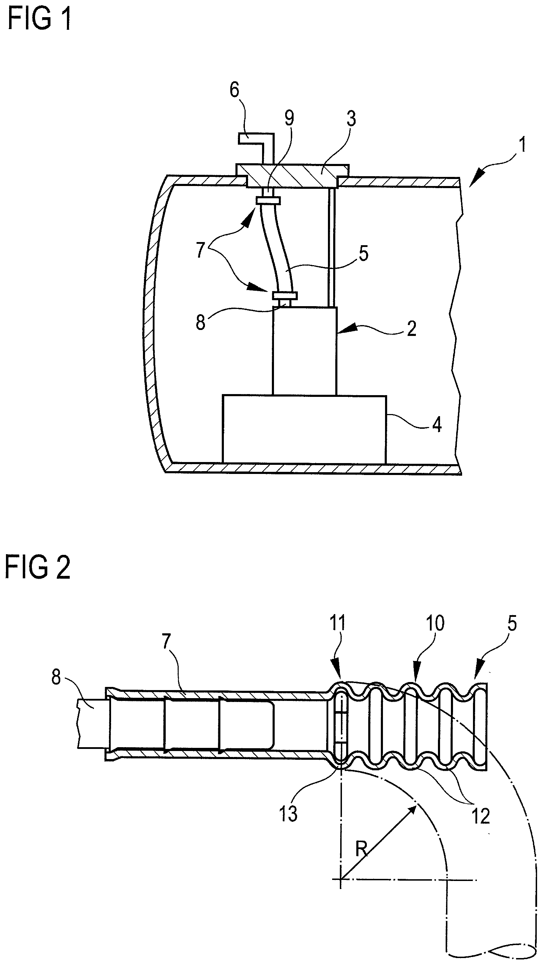

Figur 1 zeigt schematisch einen Teilbereich eines Kraftstoffbehälters 1 eines Kraftfahrzeuges mit einer darin angeordneten Kraftstoffversorgungsanlage 2 in einer Schnittdarstellung. Die Kraftstoffversorgungsanlage 2 ist an einem Flansch 3 des Kraftstoffbehälters 1 befestigt und ist mit einem Schwalltopf 4 gegen einen Bodenbereich des Kraftstoffbehälters 1 vorgespannt. Die Kraftstoffversorgungsanlage 2 ist mit einem Wellrohr 5 mit einem auf dem Flansch 3 angeordneten Anschluss 6 verbunden. An dem Anschluss 6 lässt sich eine nicht dargestellte, zu einer Brennkraftmaschine des Kraftfahrzeuges führende Vorlaufleitung anschließen. Das Wellrohr 5 hat an seinen Enden jeweils ein Endstück 7, mit dem es an Anschlussstutzen 8, 9 der Kraftstoffversorgungsanlage 2 und des Flansches 3 verbunden ist.

Figur 2 zeigt den mit dem Anschlussstutzen 8 der Kraftstoffversorgungsanlage 2 verbundenen Endabschnitt des Wellrohres 5 aus Figur 1. Das Wellrohr 5 ist einstückig mit einem Wellenabschnitt 10, einem Montageabschnitt 11 und dem auf dem Anschlussstutzen 8 aufgesteckten Endstück 7 gefertigt. Das Endstück 7 ist biegesteif und zylindrisch gestaltet. Der Wellenabschnitt 10 weist eine Vielzahl von Wellen 12 auf, wodurch die Biegsamkeit des Wellrohres 5 sichergestellt ist. Der Montageabschnitt 11 hat eine einzige wellenförmige Erhebung 13. Die Erhebung 13 hat dieselben Abmessungen wie die Wellen 12 des Wellenabschnittes 10. Weiterhin hat die Erhebung 13 des Montageabschnitts 11 denselben Abstand von der nächsten Welle 12 wie die Wellen 12 untereinander. In Figur 2 ist strichpunktiert ein möglicher Biegeradius R des Wellrohres 5 dargestellt. Hierbei ist zu erkennen, dass die mögliche Biegung des Wellrohres 5 unmittelbar an dem Montageabschnitt 11 beginnt und sich in dem Wellenabschnitt 10 fortsetzt.

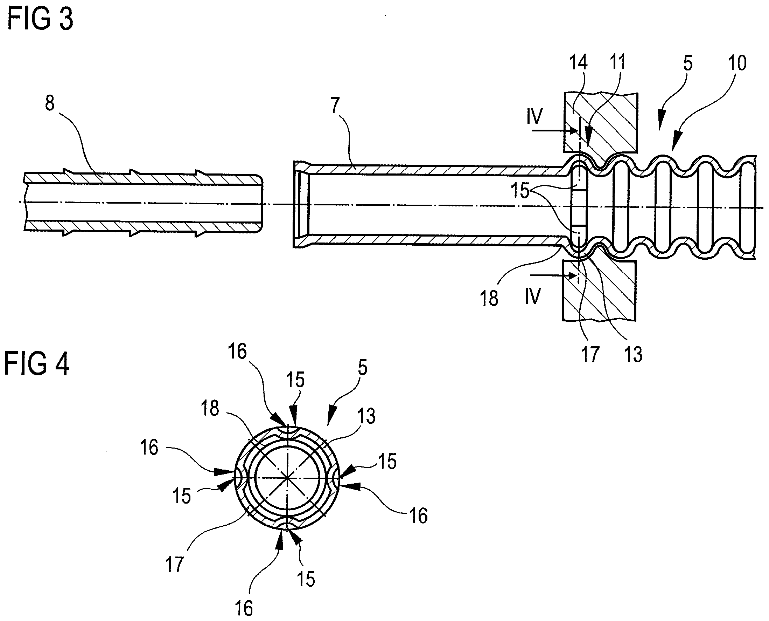

Figur 3 zeigt den Endabschnitt des Wellrohres 5 vor der Montage an dem Anschlussstutzen 8 in einer Schnittdarstellung. Ein zangenartiges Montagewerkzeug 14 ist an dem Montageabschnitt 11 angesetzt und drückt diesen mit dem Endstück 7 gegen den Anschlussstutzen 8. Die Erhebung 13 des Montageabschnitts 11 hat in axialer Richtung des Wellrohres 5 weisende Versteifungen 15 und kann hierdurch die Montagekräfte von dem Montagewerkzeug 14 auf das Endstück 7 übertragen.

Figur 4 zeigt in einer Schnittdarstellung durch die Erhebung 13 des Wellrohres 5 aus Figur 3 entlang der Linie IV - IV die in axialer Richtung des Wellrohres weisenden Versteifungen 15. Die Versteifungen 15 werden von über den Umfang verteilt angeordneten Vertiefungen 16 der Erhebung 13 des Montageabschnitts 11 gebildet. Die Vertiefungen 16 sind von einem Wellenberg 17 bis zu einem Wellental 18 der Erhebung 13 des Montageabschnitts 11 geführt. Das Wellental 18 ist unmittelbar in das in Figur 3 dargestellte Endstück 7 geführt. Die Vertiefungen 16 sind als konkave Wölbungen gestaltet.

## Patentansprüche

1. Wellrohr einer Kraftstoffleitung einer Kraftstoffversorgungsanlage eines Kraftfahrzeuges mit einem steifen Endstück und mit einem biegsamen, Wellen aufweisenden Wellenabschnitt und mit einem eine Erhebung aufweisenden, zum Ansetzen eines Montagewerkzeuges ausgebildeten Montageabschnitt, wobei der Montageabschnitt eine einzige wellenförmige Erhebung aufweist, wobei die zum Endstück (7) direkt benachbarte einzige Erhebung (13) des Montageabschnitts (11) wellenförmig gestaltet ist und zumindest eine in axialer Richtung des Montageabschnitts (11) weisende Versteifung (15) aufweist, **dadurch gekennzeichnet, dass** die Versteifung (15) durch eine in radialer Richtung des Montageabschnitts (11) eingeformte Vertiefung (16) gebildet ist.

2. Wellrohr nach Anspruch 1, **dadurch gekennzeichnet, dass** die Versteifung (15) durch eine in der wellenförmigen Erhebung (13) angeordnete, von einem Wellenberg (17) bis zu einem Wellental (18) geführte Vertiefung (16) gebildet ist.

3. Wellrohr nach Anspruch 2, **dadurch gekennzeichnet, dass** mehrere Vertiefungen (16) symmetrisch um den Umfang der wellenförmigen Erhebung (13) angeordnet sind.

4. Wellrohr nach einem der vorhergehenden Ansprüche, **dadurch gekennzeichnet, dass** vier Vertiefungen (16) in Umfangsrichtung der wellenförmigen Erhebung (13) um 90 Grad zueinander beabstandet angeordnet sind.

5. Wellrohr nach Anspruch 2 oder 3, **dadurch gekennzeichnet, dass** das Wellental (18) der wellenförmigen Erhebung (13) auf der Höhe des Durchmessers des Endstücks (7) angeordnet ist.

6. Wellrohr nach einem der Ansprüche 3 oder 4, **dadurch gekennzeichnet, dass** die Vertiefungen (16) als konkave Wölbungen ausgebildet sind.

7. Wellrohr nach einem der vorhergehenden Ansprüche, **dadurch gekennzeichnet, dass** die wellenförmige Erhebung (13) die Höhe der Wellen (12) des Wellenabschnitts (10) hat.

8. Wellrohr nach einem der vorhergehenden Ansprüche, **dadurch gekennzeichnet, dass** der Abstand der Erhebung (13) von der nächsten Welle (12) des Wellenabschnitts (10) dem Abstand zweier Wellen (12) des Wellenabschnitts (10) entspricht.

9. Wellrohr nach einem der vorhergehenden Ansprüche, **dadurch gekennzeichnet, dass** die Wandstärke der wellenförmigen Erhebung (13) und der Wellen (12) des Wellenabschnitts (10) im Wesentlichen gleich sind.

## Claims

1. Corrugated pipe of a fuel line of a fuel supply system of a motor vehicle, with a stiff end piece and with a flexible corrugated section which has corrugations and with an installation section which has a bump and is designed for the attachment of an installation tool, wherein the installation section has a single wave-shaped bump, wherein the single bump (13) of the installation section (11), which bump is directly adjacent to the end piece (7), is of wave-shaped configuration and has at least one stiffener (15) pointing in the axial direction of the installation section (11), **characterized in that** the stiffener (15) is formed by a depression (16) which is moulded in in the radial direction of the installation section (11).

2. Corrugated pipe according to Claim 1, **characterized in that** the stiffener (15) is formed by a depression (16) which is arranged in the wave-shaped bump (13) and is guided from a wave crest (17) as far as a wave trough (18).

3. Corrugated pipe according to Claim 2, **characterized in that** a plurality of depressions (16) are arranged symmetrically around the circumference of the wave-shaped bump (13).

4. Corrugated pipe according to one of the preceding claims, **characterized in that** four depressions (16) are arranged spaced apart from one another by 90 degrees in the circumferential direction of the wave-shaped bump (13).

5. Corrugated pipe according to Claim 2 or 3, **characterized in that** the wave trough (18) of the wave-shaped bump (13) is arranged level with the diameter of the end piece (7).

6. Corrugated pipe according to either of Claims 3 and 4, **characterized in that** the depressions (16) are designed as concave curvatures.

7. Corrugated pipe according to one of the preceding claims, **characterized in that** the wave-shaped bump (13) is at the height of the corrugations (12) of the corrugated section (10).

8. Corrugated pipe according to one of the preceding claims, **characterized in that** the distance of the bump (13) from the next corrugation (12) of the corrugated section (10) corresponds to the distance between two corrugations (12) of the corrugated section (10).

9. Corrugated pipe according to one of the preceding claims, **characterized in that** the wall thickness of the wave-shaped bump (13) and of the corrugations (12) of the corrugated section (10) are substantially identical.

## Revendications

1. Tube ondulé d'une conduite de carburant d'une installation d'alimentation en carburant d'un véhicule automobile avec un embout rigide et avec une partie ondulée flexible présentant des ondulations et avec une partie de montage présentant une surélévation et configurée pour la pose d'un outil de montage, dans lequel la partie de montage présente une surélévation ondulée unique, dans lequel la surélévation unique (13) de la partie de montage (11) directement voisine de l'embout (7) est réalisée en forme d'onde et présente au moins un renfort (15) orienté dans la direction axiale de la partie de montage (11), **caractérisé en ce que** le renfort (15) est formé par un creux (16) façonné dans la direction radiale de la partie de montage (11).

2. Tube ondulé selon la revendication 1, **caractérisé en ce que** le renfort (15) est formé par un creux (16) disposé dans la surélévation ondulée (13) et mené depuis une crête d'onde (17) jusqu'à une vallée d'onde (18).

3. Tube ondulé selon la revendication 2, **caractérisé en ce que** plusieurs creux (16) sont disposés de façon symétrique sur le pourtour de la surélévation ondulée (13).

4. Tube ondulé selon l'une quelconque des revendications précédentes, **caractérisé en ce que** quatre creux (16) sont disposés à une distance de 90 degrés l'un de l'autre dans la direction périphérique de la surélévation ondulée (13).

5. Tube ondulé selon la revendication 2 ou 3, **caractérisé en ce que** la vallée d'onde (18) de la surélévation ondulée (13) est disposée à la hauteur du diamètre de l'embout (7).

6. Tube ondulé selon une des revendications 3 ou 4, **caractérisé en ce que** les creux (16) sont réalisés sous forme de bombages concaves.

7. Tube ondulé selon l'une quelconque des revendications précédentes, **caractérisé en ce que** la surélévation ondulée (13) a la hauteur des ondes (12) de la partie ondulée (10).

8. Tube ondulé selon l'une quelconque des revendications précédentes, **caractérisé en ce que** la distance entre la surélévation (13) et l'onde la plus proche (12) de la partie ondulée (10) correspond à la distance de deux ondes (12) de la partie ondulée (10).

9. Tube ondulé selon l'une quelconque des revendications précédentes, **caractérisé en ce que** l'épaisseur de paroi de la surélévation ondulée (13) et celle des ondes (12) de la partie ondulée (10) sont essentiellement égales.
